# EUROPÄISCHE PATENTSCHRIFT

(11) **EP 3 180 156 B1**
(45) Veröffentlichungstag und Bekanntmachung des Hinweises auf die Patenterteilung: **20.06.2018**
(21) Anmeldenummer: 15774903.7
(22) Anmeldetag: 01.10.2015
(51) Int. Cl.: B23K 103/00, B23K 26/18, B23K 26/382

(54) **VERFAHREN ZUM HERSTELLEN VON DURCHGANGSBOHRUNGEN MITTELS LASERSTRAHLUNG IN EINER WANDUNG EINES BAUTEILS**
METHOD FOR PRODUCING THROUGH HOLES USING LASER RADIATION IN A WALL OF A COMPONENT
PROCÉDÉ DE FABRICATION DES TROUS TRAVERSANTS EN UTILISANT UN RAYONNEMENT LASER DANS LA PAROI D'UNE PIÈCE

(30) Priorität: 09.10.2014 DE 102014220523
(43) Veröffentlichungstag der Anmeldung: 21.06.2017
(73) Patentinhaber: Siemens Aktiengesellschaft, 80333 München (DE)
(72) Erfinder: DIETRICH, Jens, 14612 Falkensee (DE); KAISER, Axel, 47918 Tönisvorst (DE)
(86) Internationale Anmeldenummer: PCT/EP2015/072683
(87) Internationale Veröffentlichungsnummer: WO 2016/055345

(56) Entgegenhaltungen:
- GB-A- 2 236 070
- US-A- 5 773 790

## Beschreibung

Die Erfindung betrifft ein Verfahren zum Herstellen von Durchgangsbohrungen mittels Laserstrahlung in einer Wandung eines Bauteils, die einen Hohlraum, in dem ein unter Erwärmung verflüssigbares Schutzmittel vorgesehen ist, begrenzt, bei dem an einer Mehrzahl von definierten Bohrstellen Durchgangsbohrungen in die Wandung des Bauteils eingebracht werden, indem an den Bohrstellen nacheinander Material mittels Laserstrahlung entfernt wird.

Es gibt diverse Anwendungsbereiche, in denen Bauteile zum Einsatz kommen, welche mit Durchgangsbohrungen beliebiger Form zu versehen sind. Bei den Bauteilen kann es sich beispielsweise um Turbinenbauteile, wie etwa Gasturbinenschaufeln handeln. Die Durchgangsbohrungen können beispielsweise als Kühlöffnungen dienen.

Aus dem Stand der Technik ist es bekannt, Durchgangsbohrungen in einer Wandung eines Bauteils zu erzeugen, indem mittels eines Laserstrahls an vorgegebene Bohrstellen an dem Bauteil Material entfernt wird. Wird eine Durchgangsbohrung mittels Laserstrahlung in einer Wandung eines Bauteils hergestellt, die einen Hohlraum in den Bauteil begrenzt, so besteht die Problematik, dass der Laserstrahl nach dem Durchbohren der zu bearbeitenden Wandung in den Hohlraum eintritt und auf eine weitere Wandung des Bauteils trifft, die den Hohlraum in Bezug auf die Laserstrahlbohrrichtung rückseitig begrenzt. Infolge dessen können unerwünschte Beschädigungen der rückseitigen Wandung hervorgerufen werden.

Die US 5,773,790 B offenbart ein Verfahren zur Herstellung von Durchgangsbohrungen mittels eines Lasers, bei dem vorab ein verflüssigbares Schutzmittel in den Hohlraum des Bauteils eingebracht wird, um dieses im Inneren vor der Laserstrahlung zu schützen.

Dieser Problematik wird im Stand der Technik u.a. dadurch begegnet, dass ein Schutzelement in den Hohlraum in dem Bauteil eingebracht wird. Aus der WO 2004/087364 beispielsweise geht ein Verfahren hervor, bei dem ein kugelförmiges Schutzelement derart in dem Hohlraum angeordnet wird, dass nach dem Durch bruch des Laserstrahls durch die vorderseitige Wandung des Bauteils der Laserstrahl auf das Schutzelement in dem Hohlraum trifft. Das Schutzelement absorbiert dann den Laserstrahl und es wird verhindert, dass die rückseitige Wandung des Bauteils beschädigt wird.

Diese Vorgehensweise hat sich zum Schutz von Bauteilen mit Hohlräumen bewährt. Es ist jedoch problematisch, dass das Schutzelement nur zum Einsatz kommen kann, wenn der Hohlraum zumindest eine Öffnung aufweist, durch welche es in diesen eingesetzt werden kann. Derartige Schutzelemente können folglich nur zum Einsatz kommen, wenn an leicht zugänglichen Bauteilstellen gearbeitet wird, insbesondere, wenn der Hohlraum in dem Bauteil leicht zugänglich ist.

Daher sind weitere Verfahren entwickelt worden, um auch in Bauteilen mit nicht bzw. schwer zugänglichen, insbesondere nahezu vollständig verschlossenen oder komplex geformten Hohlräumen, die Wandung, die den Hohlraum rückseitig begrenzt bei der Erzeugung von Durchgangsbohrungen mittels Laserstrahlen zu schützen. So ist es aus dem Stand der Technik beispielsweise bekannt Schutzmittel einzusetzen, die unter Erwärmung verflüssigt und anschließend in den Hohlraum eingegossen, eingespritzt oder eingesprüht werden. In flüssigem Zustand kann ein Schutzmittel auch in schwer zugängliche Hohlräume auf die vorgenannten Arten eingebracht werden. Bei Umgebungstemperatur härtet das eingebrachte Schutzmittel in dem Hohlraum aus. Während des Bohrvorganges kann dann in den Hohlraum eintretende Laserstrahlung durch das in diesem vorgesehene Schutzmittel absorbiert werden und die rückseitig den Hohlraum begrenzende Wandung wird vor Zerstörungen geschützt. Der Hohlraum kann zum Schutz der Wandung vollständig mit dem Schutzmittel gefüllt sein. Das Schutzmittel ist zumindest in dem Bereich des Hohlraumes vorgesehen, in dem die Durchgangsbohrungen herzustellen sind. Nach dem Fertigstellen der Durchgangsbohrungen kann das Schutzmittel durch erneutes Erwärmen wieder verflüssigt und aus dem Hohlraum herausgelassen werden.

Der Einsatz verflüssigbarer Schutzmittel hat sich bewährt, um Bauteile mit schwer zugänglichen Hohlräumen vor unerwünschten Beschädigungen bei der Erzeugung von Durchgangsbohrungen mittels Laserstrahlen zu schützen. Es wird jedoch als nachteilig erachtet, dass für den Fall, dass eine Mehrzahl von Durchgangsbohrungen, beispielsweise eine Reihe von Durchgangsbohrungen in die Wandung des Bauteils einzubringen sind, das Bauteil sowie das Schutzmittel infolge der auftreffenden Laserstrahlung so stark erwärmt werden, dass das Schutzmittel wieder in den flüssigen Zustand überführt wird. Dabei besteht die Gefahr, dass das unerwünscht verflüssigte Schutzmittel während des Bearbeitungsprozesses wieder aus dem Hohlraum herausläuft oder sich in diesem auf unvorteilhafte Weise umverteilt. Im Ergebnis kann ein zuverlässiger Schutz der den Hohlraum rückseitig begrenzenden Wandung nicht immer gewährleistet werden.

Ausgehend von diesem Stand der Technik ist es eine Aufgabe der vorliegenden Erfindung, ein Verfahren zum Herstellen von Durchgangsbohrungen der vorgenannten Art derart weiter zu entwickeln, dass zu allen Zeiten ein zuverlässiger Schutz von Wandungen gewährleistet ist, die einen Hohlraum in dem Bauteil begrenzen.

Diese Aufgabe wird bei einem Verfahren der eingangs genannten Art dadurch gelöst, dass die Fläche der Durchgangsbohrungen jeweils in zwei oder mehr Sektoren unterteilt ist und die Entfernung von Material sektorweise erfolgt, wobei die unmittelbar aufeinanderfolgende Bearbeitung zweier Sektoren in der Weise erfolgt, dass nach der Entfernung von Material in einem Sektor an einer vorgegeben Bohrstelle Material in einem Sektor an einer weiteren Bohrstelle entfernt wird.

Gemäß der vorliegenden Erfindung ist die Fläche jeder Durchgangsbohrung, also der Flächenbereich vorgegebener Größe und Form auf der Oberfläche des zu bearbeitenden Bauteils, über welchen sich die herzustellende Durchgangsbohrung erstrecken soll, in mehrere Sektoren unterteilt. Die Herstellung der Durchgangsbohrungen von in Sektoren unterteilter Fläche erfolgt dabei in der Weise, dass nicht in einem Laserbearbeitungs-Intervall eine vollständige Durchgangsbohrung an einer Bohrstelle hergestellt wird, sondern zunächst nur innerhalb eines Sektors der Fläche einer Durchgangsbohrung Material entfernt wird. Anschließend wird erfindungsgemäß mit einem nächsten Sektor der Fläche einer Durchgangsbohrung an einer anderen Bohrstelle weiter gemacht, also dort ein Sektor der Fläche der Durchgangsbohrung mittels Laserstrahlung bearbeitet.

Durch die sektorweise Bearbeitung der Durchgangsbohrungen werden diese innerhalb eines Bearbeitungsintervalls nur teilweise und nicht vollständig hergestellt, wodurch die Wärmemenge, welche an der bearbeiteten Bohrstelle in das Bauteil eingebracht wird, vergleichsweise gering ausfällt. Hierdurch wird verhindert, dass sich das in dem Hohlraum des Bauteils vorgesehene Schutzmittel lokal so stark erwärmt, dass es sich verflüssigt und aus dem Hohlraum herausfließt bzw. sich unvorteilhaft in diesem verteilt. Im Ergebnis steht das Schutzmittel bei jedem Bearbeitungsvorgang eines Sektors in ausgehärtetem Zustand und in geeigneter Verteilung in dem Hohlraum zur Verfügung. Eine den Hohlraum rückseitig begrenzende Wandung ist so zu allen Zeiten zuverlässig vor Beschädigungen geschützt, die durch Laserstrahlung, die in den Hohlraum eintritt, verursacht werden können.

Für den Schutz der den Hohlraum rückseitig begrenzenden Wandung kann dabei jedes bekannte Schutzmittel zum Einsatz kommen, welches durch Erwärmung verflüssigt werden kann und unterhalb einer vorgegebenen Temperatur wieder aushärtet. Beispielsweise kann als Schutzmittel ein Polymer in flüssigem Zustand in den Hohlraum eingebracht, insbesondere eingegossen oder eingespritzt oder eingesprüht werden, bevor die Durchgangsbohrungen eingebracht werden. Auch Wachs kann als Schutzmittel verwendet werden. Zwischen dem Einbringen des flüssigen Schutzmittels in den Hohlraum des Bauteils und dem Beginn der Bearbeitung zur Erzeugung der Durchgangsbohrungen wird zweckmäßiger Weise eine ausreichende Zeit abgewartet, bis das Schutzmittel ausgehärtet ist.

Die an den Bohrstellen herzustellenden Durchgangsbohrungen können jede beliebige Form aufweisen. So kann beispielsweise vorgesehen sein, dass die Durchgangsbohrungen einen runden Querschnitt oder einen vieleckigen, insbesondere viereckigen, bevorzugt trapezförmigen Querschnitt oder einen ovalen Querschnitt oder einen Querschnitt mit Ecken und Rundungen aufweisen.

Was die Unterteilung der Flächen der Durchgangsbohrungen in Sektoren angeht, kann beispielsweise die Fläche der Durchgangsbohrungen jeweils in drei, vier, fünf oder mehr Sektoren unterteilt sein. Auch können die Sektoren prinzipiell eine beliebige Form aufweisen. Es kann auch vorgesehen sein, dass die Sektoren, in welche die Fläche jeder jede Durchgangsbohrung unterteilt ist, gleichgroß, bevorzugt kongruent sind.

Eine besonders bevorzugte Ausführungsform des erfindungsgemäßen Verfahrens zeichnet sich dadurch aus, dass die weitere Bohrstelle von der vorgegebenen Bohrstelle weiter entfernt liegt als wenigstens zwei, insbesondere drei oder mehr zu der vorgegebenen Bohrstelle näher liegende Bohrstellen, die ausgelassen werden.

Alternativ oder zusätzlich kann vorgesehen sein, dass zwischen der vorgegebenen Bohrstelle und der weiteren Bohrstelle wenigstens eine Bohrstelle liegt, die ausgelassen wird, insbesondere zwischen der vorgegebenen und der weiteren Bohrstelle zwei oder mehr Bohrstellen liegen, die ausgelassen werden.

Gemäß dieser bevorzugten Ausführungsformen wird, nachdem in einem Sektor der Fläche einer herzustellenden Durchgangsbohrung an einer ersten Bohrstelle Material mittels Laserstrahlung entfernt wurde, nicht zu einem Sektor einer benachbarten, also einer zu der ersten Bohrstelle nächstliegenden Bohrstelle gesprungen, sondern es werden gezielt Bohrstellen ausgelassen. Das jeweils nächste Bearbeitungsintervall erfolgt dann entsprechend in einem Sektor an einer Bohrstelle, die von der ersten Bohrstelle weiter entfernt liegt, als die erfindungsgemäß ausgelassene(n) bzw. übersprungenen Bohrstelle (n) .

Bei der automatisierten Herstellung einer Mehrzahl von Durchgangsbohrungen in einer Wandung eines Bauteils stehen die Bohrstellen, also die Stellen, an denen zur Erzeugung einer Durchgangsbohrung Material mittels der Laserstrahlung zu entfernen ist, fest, bevor mit dem eigentlichen Bohrvorgang begonnen wird, so dass innerhalb eines feststehenden Bohrstellen-Musters ohne Weiteres gezielt gemäß der vorliegenden Erfindung vorgegangen werden kann.

Die Bohrstellen, die erfindungsgemäß zwischen zwei unmittelbar nacheinander bearbeiteten Sektoren ausgelassen bzw. übersprungen werden sind entweder zu einem früheren Zeitpunkt bereits mittels Laserstrahlung bearbeitet worden und/oder es wird zu einem späteren Zeitpunkt zu diesen zurückgekehrt, um dann Sektoren an den ausgelassen Bohrstellen erstmals oder erneut zu bearbeiten. Wesentlich ist, dass gemäß dieser Ausführungsform nach der Bearbeitung eines Sektors an einer Bohrstelle zumindest eine Bohrstelle und zwar zumindest die nächstliegende Bohrstelle und gegebenenfalls weiter Bohrstellen ausgelassen wird bzw. werden. Es werden also nicht die verbleibenden Sektoren der Fläche der an dieser Bohrstelle herzustellenden Durchgangsbohrung bearbeitet, sondern es wird mit der Bearbeitung eines Sektors an einer weiter entfernt liegenden Bohrstelle weitergemacht.

Existieren mehrere Bohrstellen, die der vorgegebenen, ersten Bohrstelle am nächsten liegen, also mehrere Bohrstellen, die denselben kleinsten Abstand zu der ersten Bohrstelle aufweisen, werden zweckmäßiger Weise alle diese nächstliegenden Bohrstellen gleichen Abstandes ausgelassen. Liegt nur eine Bohrstelle der ersten Bohrstelle am nächsten, kann beispielsweise auch nur diese eine Bohrstelle ausgelassen bzw. übersprungen werden und es wird ein Sektor an einer weiteren Bohrstelle bearbeitet, die von der ersten Bohrstelle weiter entfernt liegt, als die eine ausgelassene Bohrstelle.

Die definierten Bohrstellen können beispielsweise in einem geordneten Muster angeordnet sein und insbesondere wenigstens eine Reihe und/oder wenigstens eine Zeile von Bohrstellen umfassen. In diesem Falle kann derart vorgegangen werden, dass nach der Bearbeitung eines Sektors an einer ersten Bohrstelle in einer Reihe bzw. Zeile die nächste oder die nächsten Bohrstellen in der Reihe bzw. Zeile übersprungen werden und an einer zweiten Bohrstelle, die entsprechend von der ersten Bohrstelle weiter entfernt ist, als die übersprungenen Bohrstellen, der nächste Sektor bearbeitet wird.

Sind die definierten Bohrstellen nicht in einem geordneten Muster mit Reihen und Zeilen angeordnet, sondern in ungeordneter Form positioniert, so werden nach der Bearbeitung eines Sektors an einer ersten Bohrstelle erfindungsgemäß insbesondere wenigstens zwei Bohrstellen, die der ersten Bohrstelle am nächsten liegen, bevorzugt drei oder mehr Bohrstellen, die der ersten Bohrstelle am nächsten liegen, ausgelassen. Der nächste Sektor wird dann an einer zweiten Bohrstelle bearbeitet, die von der ersten Bohrstelle weiter entfernt liegt, als die wenigstens zwei, drei oder mehr ausgelassenen, näher liegenden Bohrstellen.

Durch das gezielte Überspringen bzw. Auslassen nächst- bzw. naheliegender Bohrstellen gemäß dieser Ausführungsform wird die Wärmemenge, die durch mehrere unmittelbar nacheinander erfolgende Laser-Bearbeitungsvorgänge von Sektoren in das Bauteil sowie in den Hohlraum und damit in das in diesem vorgesehene verflüssigbare Schutzmittel eingebracht wird, auf weiter auseinanderliegende Bereiche verteilt. Der Energieeintrag in das Schutzmittel pro Zeit- und Volumeneinheit wird folglich reduziert.

Das Schutzmittel kann gemäß dieser Ausführungsform in und um den Bereich einer Bohrstelle, an welcher gerade Material in einem Sektor entfernt wurde, erst wieder vollständig abkühlen, bevor in die unmittelbare Umgebung des bearbeiteten Sektors, konkret zu der zuerst bearbeiteten oder einer zu dieser benachbarten Bohrstelle zurückgekehrt und die Laserbearbeitung dort fortgesetzt wird. Auf diese Weise wird besonders zuverlässig verhindert, dass das Schutzmittel während des Laser-Bearbeitungsprozesses so stark erwärmt wird, dass es wieder in den flüssigen Zustand übergeht und aus dem Hohlraum herausfließen bzw. sich in diesem unvorteilhaft verteilen kann.

Eine weitere Ausführungsform des erfindungsgemäßen Verfahrens zeichnet sich dadurch aus, dass in den Sektoren entlang wenigstens einer Abtragslinie, insbesondere entlang mehrerer Abtragslinien Material entfernt wird. Um die vorgegebene Geometrie der Sektoren einer Durchgangsbohrung zu erzielen, also Material über die gesamte Fläche eines Sektors zu entfernen, wird ein Laserstrahl gemäß dieser Ausführungsform entlang zweidimensionaler Bahnen im Bereich der Sektoren bewegt. Als Systemtechnik kann dabei beispielsweise ein Scanner für die Strahlablenkung und die Fokussierung auf das Bauteil zum Einsatz kommen.

In einem Sektor kann beispielsweise entlang einer einzigen Abtragslinie Material mittels der Laserstrahlung zu entfernen sein. Der Sektor ist dann durch die Form der einzelnen Abtragslinie, die gerade oder gebogen sein kann, definiert. Eine gebogene Abtragslinie kann beispielsweise spiralförmig sein, wobei die Außenkontur der Spirale der Kontur des Sektors entspricht. Es können in einem Sektor auch mehrere Abtragslinien vorgesehen sein, entlang derer Material zu entfernen ist, wobei der Sektor dann eine Form aufweist, die durch die Gesamtheit der in diesen vorgesehenen Abtragslinien definiert ist.

Findet die Materialentfernung entlang vorgegebener Abtragslinien in den Sektoren statt, so ist insbesondere vorgesehen, dass in den Sektoren entlang wenigstens einer geraden Abtragslinie, insbesondere entlang mehrerer gerader Abtragslinien, die sich bevorzugt parallel zueinander erstrecken, Material entfernt wird. Gemäß dieser Ausführungsform wird, insbesondere um den Verfahrweg der Laserstrahleinrichtung bzw., falls zur Bearbeitung der Bohrstellen nicht der Laser sondern das Werkstück verfahren wird, den Verfahrweg des zu bearbeitenden Werkstücks zu optimieren, Material entlang der geraden Abtragslinien entfernt. Für eine derartige Abtragung von Material kann die Laserstrahleinrichtung bzw. das Bauteil linear verfahren werden, was einen effizienten Bearbeitungsvorgang ermöglicht.

Diverse Anwendungsbereiche erfordern es ferner, dass in einem Bauteil Durchgangsbohrungen in einem regelmäßigen Muster eingebracht werden.

So kann in Weiterbildung des erfindungsgemäßen Verfahrens die Mehrzahl von Bohrstellen mehrere Reihen und Zeilen von Bohrstellen umfassen und es kann in den Sektoren entlang gerader Abtragslinien Material entfernt werden, die sich entlang der Längsrichtung der Reihen und/oder der Zeilen erstrecken.

In diesem Fall sind in besonders bevorzugter Weise gerade Abtragslinien vorgesehen, die sich entlang der Reihen und/oder der Zeilen, also quer zu den Reihen, erstrecken. Eine Laserstrahleinrichtung, welche zur Entfernung des Materials in den Sektoren zum Einsatz kommt, kann dann in vorteilhafter Weise entlang einer geraden Strecke über die gesamte Reihe bzw. Zeile bewegt werden, um in den Sektoren der Reihe bzw. Zeile Material zu entfernen.

Dabei kann weiterhin vorgesehen sein, dass Material ausschließlich entlang gerader Abtragslinien entfernt wird, die sich entweder entlang der Längsrichtung der Reihen oder entlang der Längsrichtung der Zeilen erstrecken. Hierdurch wird es möglich, dass die Laserstrahleinrichtung zur Abtragung des Materials grundsätzlich nur linear verfahren werden muss.

Erfolgt die Bearbeitung entlang gerader Abtragslinien, ist in Weiterbildung des erfindungsgemäßen Verfahrens ferner vorgesehen, dass in zueinander korrespondierenden Sektoren der Flächen der Durchgangsbohrungen in einer Reihe die geraden Abtragslinien, die sich entlang der Längsrichtung der Reihe erstrecken, fluchten und/oder in zueinander korrespondierenden Sektoren der Flächen der Durchgangsbohrungen in einer Zeile die geraden Abtragslinien, die sich entlang der Längsrichtung der Zeile erstrecken, fluchten, so dass ein Laserstrahl zur Entfernung von Material entlang fluchtender Abtragslinien der Sektoren in einer Reihe bzw. in einer Zeile entlang einer geraden Strecke entlang der Reihe bzw. Zeile verfahren werden kann.

Die Laserstrahleinrichtung kann gemäß dieser Ausführungsform in besonders vorteilhafter Weise entlang einer sich in Richtung der Reihe bzw. Zeile erstreckenden Geraden verfahren werden, um Material in zueinander korrespondierenden Sektoren an den Bohrstellen einer Reihe bzw. Zeile entlang der fluchtenden Abtragslinien zu entfernen. Dabei wird insbesondere an jeder Bohrstelle der gleiche Sektor der jeweiligen Durchgangsbohrung auf diese Weise, also im Rahmen des geradlinigen Verfahrens der Laserstrahleinrichtung bearbeitet, bis beispielsweise an jeder zweiten Bohrstelle in einem Sektor Material entfernt worden ist. Danach können die entsprechenden Sektoren an den ausgelassenen Bohrstellen bearbeitet werden, wobei die Laserstrahleinrichtung auch hierfür entlang einer geraden Strecke verfahren wird.

Die Lasereinrichtung über eine gesamten Reihe oder Zeile entlang einer geraden Strecke zu bewegen und entlang dieser in den fluchtenden Abtragslinien Material zu entfernen bringt den großen Vorteil, dass die Lasereinrichtung bei der Bearbeitung entlang der gesamten Reihe bzw. Zeile immer in eine Richtung verfahren wird und weder umgelenkt noch beschleunigt werden muss. Die Laserstrahleinrichtung kann zur Bearbeitung schnell entlang einer Reihe oder einer Zeile verfahren werden, da sie sich schnell und kontrolliert ein und ausschalten lässt, um in dem jeweiligen Sektor, wenn sie dieses erreicht hat, Material zu entfernen. Im Ergebnis können eine zügige Bearbeitung und optimierte Verfahrwege der Laserstrahleinrichtung realisiert und damit eine besonders effiziente und wirtschaftliche Herstellung von Durchgangsbohrungen ermöglicht werden.

Umfasst die Mehrzahl von definierten Bohrstellen mehrere Reihen und mehrere Zeilen und wird erfindungsgemäß wenigstens eine Bohrstelle ausgelassen, so ist in Weiterbildung des erfindungsgemäßen Verfahrens ferner vorgesehen, dass die unmittelbar aufeinanderfolgende Bearbeitung zweier Sektoren an Bohrstellen in unterschiedlichen Reihen und/oder unterschiedlichen Zeilen erfolgt.

Dabei kann auch vorgesehen sein, dass zwischen zwei unmittelbar aufeinanderfolgend bearbeiteten Sektoren jeweils mehrere Reihen und/oder Zeilen von Bohrstellen ausgelassen werden.

Bei diesen Ausgestaltungen wird der zweite der beiden unmittelbar nacheinander bearbeiteten Sektoren an einer weiteren Bohrstelle bearbeitet, die ausgehend von der vorgegebenen Bohrstelle in einer nächstliegenden Reihe oder in einer hinter einer nächstliegenden Reihe vorgesehenen Reihe liegt und/oder die ausgehend von der vorgegebenen Bohrstelle in einer nächstliegenden Zeile oder in einer hinter einer nächstliegenden Zeile vorgesehenen Zeile liegt. Konkret wird beispielsweise der zweite Sektor an einer weiteren Bohrstelle bearbeitet, die in der nächsten Reihe, also ober oder unterhalb der ersten Bohrstelle oder in der nächsten Zeile, also rechts oder links von der ersten Bohrstelle oder aber in der nächsten Reihe und der nächsten Zeile, beispielsweise unterhalb und rechts oder oberhalb und links von der ersten Bohrstelle, vorgesehen ist. Dabei wird grundsätzlich so gesprungen, dass der zweite Sektor an einer Bohrstelle bearbeitet wird, die von der ersten Bohrstelle weiter entfernt liegt, als eine oder mehrere nächstliegende Bohrstellen, die erfindungsgemäß gezielt ausgelassen werden.

Es ist beispielsweise, wenn die Bohrstellen mehrere Reihen umfassen auch möglich, zunächst in einer kompletten Reihe von Bohrstellen die Sektoren auf erfindungsgemäße Weise zu bearbeiten und dann in eine nächste, darunter oder darüber liegende Reihe zu springen und diese in der gleichen Weise abzuarbeiten und so weiter. Innerhalb einer jeden Reihe wird dabei beispielsweise an der ersten Bohrstelle mit der Bearbeitung eines Sektors begonnen und es wird dann beispielsweise immer eine Bohrstelle in der Reihe übersprungen, also ausgelassen und an der jeweils übernächsten Bohrstelle wird der nächste Sektor, bei welchem es sich zur Optimierung der Verfahrwege der Laserstrahleinrichtung insbesondere um den korrespondierenden Sektor an dieser Bohrstelle handelt, bearbeitet. Nachdem das Ende der Reihe erreicht ist, können anschließend die korrespondierenden Sektoren an den ausgelassenen Bohrstellen, zwischen denen dann jeweils eine Bohrstelle liegt, an der bereits Material entfernt wurde, nacheinander bearbeitet werden. In einem nächsten Schritt kann dann beispielsweise in die nächste Reihe gesprungen und dort entsprechend verfahren werden, oder aber es werden in der vorgenannten Weise zunächst sämtliche verbleibenden Sektoren in der Reihe bearbeitet.

Alternativ dazu, dass Reihe für Reihe vorgegangen wird, kann auch, nachdem eine Reihe auf die vorgenannte erfindungsgemäße Weise bearbeitet wurde, zu einer Bearbeitung entlang einer Zeile, also senkrecht zu der Reihe gewechselt werden.

Für den Fall, dass die Flächen der Durchgangsbohrungen Sektoren aufweisen, in denen gerade Abtragslinien vorgesehen sind, die sich entlang der Reihen erstrecken und die Flächen der Durchgangsbohrungen Sektoren aufweisen, in denen gerade Abtragslinien vorgesehen sind, die sich entlang der Zeilen erstrecken, kann insbesondere erst entlang der Reihe gefahren werden, um entlang aller Abtragslinien, die sich in Richtung der Reihen erstrecken, Material zu entfernen und anschließend entlang der Zeilen gefahren werden, um entlang aller Abtragslinien, die sich in Richtung der Zeilen erstrecken, Material zu entfernen.

In Weiterbildung des erfindungsgemäßen Verfahrens ist ferner vorgesehen, dass in einem vorgegebenen Muster jeweils eine oder mehrere nächstliegende Bohrstellen und/oder eine oder mehrere nächstliegende Reihen von Bohrstellen und/oder eine oder mehrere nächstliegende Zeilen von Bohrstellen ausgelassen werden. Es ist beispielsweise zweckmäßig, für den Fall, dass von der Mehrzahl von definierten Bohrstellen ein gleichmäßiges Feld aufgespannt wird, durch gleichmäßiges Überspringen von Bohrstellen und späteres Zurückkehren zu den übersprungenen Bohrstellen an allen Bohrstellen durch die erfindungsgemäße sektorweise Bearbeitung Durchgangsbohrungen erzeugt werden.

Bevorzugter Weise werden die Sektoren gemäß dem vorliegenden Verfahren in einer Reihenfolge an den Bohrstellen des vorgegebene Musters von Bohrstellen erzeugt, welche einerseits eine ausreichenden Verteilung der Wärmemenge ermöglicht und andererseits die Verfahrwege für die Lasereinrichtung, welche zur Herstellung der Durchgangsbohrungen zum Einsatz kommt, optimiert. Dem Fachmann ist klar, dass es beispielsweise möglich ist, für ein vorgegebenes Bauteil, in welches Durchgangsbohrungen vorgegebener Form und vorgegebenen Durchmessers, die erfindungsgemäß in Sektoren unterteilt und an festgelegten Bohrstellen zu erzeugen sind, im Einzelnen zu berechnen, insbesondere zu simulieren, wie der Wärmeeintrag in das Bauteil und insbesondere das in dem Hohlraum des Bauteils vorgesehene Schutzmittel konkret erfolgt. So kann beispielsweise berechnet werden, welcher Abstand mindestens zwischen zwei unmittelbar nacheinander bearbeiteten Sektoren einzuhalten ist, damit sich der Wärmeeintrag nicht derart akkumuliert, dass eine lokale Verflüssigung des Schutzmittels auftritt. Ist dieser Abstand bekannt, können die Sektoren an den unterschiedlichen Bohrstellen in einer Reihenfolge bearbeitet werden, die es ermöglicht, dass dieser Abstand immer eingehalten wird, aber nicht unnötig weit mit der Lasereinrichtung gefahren wird. Optimierungen hinsichtlich anderer Parameter sind ebenfalls denkbar.

Wird erfindungsgemäß wenigstens eine Bohrstelle ausgelassen, so zeichnet sich eine weitere Ausführungsform dadurch aus, dass die weitere Bohrstelle mindestens 1,5 mal, insbesondere mindestens zwei Mal und vorzugsweise mindestens drei Mal oder mindestens fünf Mal weiter von der vorgegebenen Bohrstelle entfernt liegt als diejenige ausgelassene Bohrstelle, die der vorgegebenen Bohrstelle am nächsten liegt. In diesem Falle wird, nachdem eine erster Sektor an einer ersten Bohrstelle bearbeitet wurde, für die Bearbeitung des nächsten Sektors eine Bohrstelle gewählt, deren Entfernung mehr als ein Vielfaches, insbesondere mehr als das 1,5-fache, das Zweifache, das Dreifache oder das Fünffache von der Entfernung beträgt, die zwischen der ersten Bohrstelle und derjenigen zu dieser am nächsten liegenden Bohrstelle, die ausgelassen wurde, liegt. Ist die ausgelassene bzw. übersprungene Bohrstelle, die der ersten Bohrstelle am nächsten liegt beispielsweise 8 mm von dieser entfernt, so wird der zweite Sektor gemäß dieser Ausführungsform an einer zweiten Bohrstelle bearbeitet, die mehr als 12 mm, insbesondere mehr als 16 mm, mehr als 24 mm oder mehr als 40 mm von der ersten Bohrstelle entfernt ist. Es können auch mehrere Bohrstellen existieren, die den gleichen minimalen Abstand zu der vorgegebenen Bohrstelle aufweisen, also mehrere nächstliegende Bohrstellen, wobei dann in gleicher Weise zu einer Bohrstelle gesprungen wird, die in einem Abstand von der vorgegebenen Bohrstelle liegt, der einem Vielfachen des Abstandes entspricht, den diese mehreren nächstliegenden Bohrstellen jeweils zu der vorgegebenen Bohrstelle aufweisen.

Gemäß einer weiteren Ausführungsform des erfindungsgemäßen Verfahrens ist ferner vorgesehen, dass die Materialentfernung in den Sektoren in Bezug auf die Flächen der Durchgangsbohrungen weiter außen liegend beginnt und dann jeweils weiter innen liegend fortgeführt wird. Es hat sich gezeigt, dass eine Materialabtragung mittels Laserstrahlung, die in Bezug auf die jeweilige Durchgangsbohrung außen beginnt und dann jeweils nach innen hin fortgesetzt wird besonders vorteilhaft ist, da ein Fließen der Wärme in die Umgebung der Durchgangsbohrung, also über den Randbereich dieser hinaus, reduziert wird. Durch eine Bearbeitung, also Materialentfernung von außen nach innen wird der Wärmeeintrag im Randbereich der herzustellenden Durchgansbohrung reduziert. Hierdurch können Schmelz-, Oxidschicht und Gefügeänderungen sowie thermische Spannungen des bearbeiteten Bauteils verringert werden, wodurch dessen Festigkeit und Lebensdauer vergrößert wird.

Entsprechend wird insbesondere mit der Entfernung von Material jeweils in einem Bereich der Außenkontur der Fläche, über welche sich die herzustellende Durchgangsbohrung erstrecken soll, begonnen. Folglich wird zuerst ein Sektor bearbeitet, welcher sich bis zu der Außenkontur erstreckt. Weist die Fläche eine Außenkontur mit geraden Streckenabschnitten auf, wie es beispielsweise bei einer Durchgangsbohrung mit einem mehreckigen Querschnitt der Fall ist, wird insbesondere Material zunächst entlang einer geraden Abtragslinie, die sich entlang der Außenkontur erstreckt, entfernt.

Eine weitere vorteilhafte Ausführungsform des erfindungsgemäßen Verfahrens zeichnet sich ferner dadurch aus, dass die Entfernung von Material mittels Laserstrahlung schichtweise erfolgt.

Um einen Abtrag von Material in die Tiefe zu gewährleisten kann Material schichtweise mittels der Laserstrahlung entfernt werden. Hierfür wird der Materialabtrag insbesondere je Sektor der Fläche der Durchgangsbohrungen Schicht für Schicht sukzessive wiederholt. Dabei kann insbesondere vorgesehen sein, dass zunächst erfindungsgemäß Material in einer Abtragsebene sektorweise entfernt wird, insbesondere, bis in allen Sektoren der Flächen aller Durchgangsbohrungen Material in einer Abtragsebene entfernt wurde und dann wird in einem nächsten Schritt Material in einer darunterliegenden Abtragsebene entfernt, wobei der gesamte Verfahrweg der Laserstrahleinrichtung insbesondere identisch zu dem Verfahrweg in der ersten Abtragsebene ist, also sämtliche Sektoren in der gleichen Reihenfolge bearbeitet werden.

Weitere Merkmale und Vorteile der vorliegenden Erfindung werden anhand der nachfolgenden Beschreibung einer Ausführungsform des erfindungsgemäßen Verfahrens unter Bezugnahme auf die beiliegende Zeichnung deutlich.

In der Zeichnung zeigt:
- Fig. 1: in schematischer Schnittdarstellung ein Bauteil mit einem nahezu vollständig verschlossenen Hohlraum,
- Figur 2: in schematischer Darstellung eine Aufsicht auf ein regelmäßiges Bohrstellenmuster, gemäß dem in der oberen Wandung des in Figur 2 dargestellten Bauteils Durchgangsbohrungen unter Anwendung des erfindungsgemäßen Verfahrens herzustellen sind,
- Figur 3: eine vergrößerte Darstellung einer der in Figur 2 dargestellten Durchgangsbohrungen mit rechteckiger Fläche, die in vier Sektoren unterteilt ist,
- Figuren 4 - 7: eine schematische Darstellung zu den erfindungsgemäßen Verfahrensschritten,
- Figur 8: eine vergrößerte Darstellung der Fläche der Durchgangsbohrungen wie in Figur 1, bei der in zwei Sektoren der Fläche entlang jeweils drei gerader Abtragslinien Material entfernt wurde,
- Figuren 9 - 12: eine weitere schematische Darstellung zu den erfindungsgemäßen Verfahrensschritten,
- Figur 13: eine vergrößerte Ansicht der Fläche einer Durch-gangsbohrung, bei der in allen Sektoren entlang jeweils drei gerader Abtragslinien Material ent-fernt wurde.

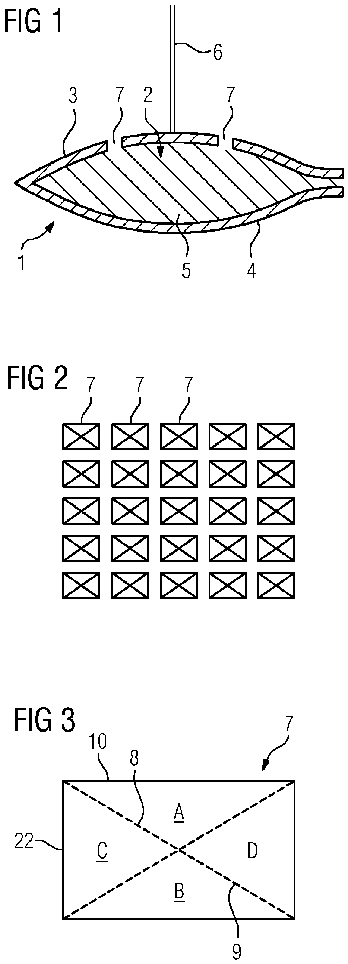

Die Figur 1 zeigt in schematischer Schnittdarstellung ein Bauteil 1 mit einem schwer zugänglichen Hohlraum 2. Der Hohlraum 2 wird von einer oberen Wandung 3 und einer unteren Wandung 4 des Bauteils 1 begrenzt. Der Hohlraum 2 ist nahezu vollständig durch die obere Wandung 3 und die untere Wandung 4 verschlossen. Lediglich in dem in Figur 1 nach rechts weisenden Endbereich des Bauteils 1 ist der Hohlraum 2 über eine schmale Öffnung zugänglich.

Der schwer zugängliche Hohlraum 2 des Bauteils 1 ist mit einem unter Erwärmung verflüssigbaren Schutzmittel 5, konkret einem Polymer, gefüllt. Zur Einbringung des Schutzmittels 5 in den Hohlraum 2 wurde dieses zunächst unter Erwärmung in den flüssigen Zustand überführt und anschließend über die Öffnung in dem in Figur 1 nach rechts weisenden Endbereich des Bauteils 1 in den Hohlraum 2 eingegossen. Es wurde anschließend eine vorgegebene Zeit abgewartet, die das Schutzmittel 5 benötigte, um bei Umgehungstemperatur vollständig auszuhärten.

In die obere Wandung 3 des Bauteils 1 sind mittels eines in Figur 1 schematisch dargestellten Laserstrahls 6 Durchgangsbohrungen 7 an einer Vielzahl von vorgegebenen Bohrstellen einzubringen.

Konkret sind in die obere Wandung 3 des Bauteils 1 insgesamt 25 Durchgangsbohrungen 7 gemäß des in Figur 2 schematisch dargestellten Bohrstellen- Musters einzubringen. Das Bohrstellen-Muster umfasst fünf übereinander liegende Reihen mit jeweils 5 Bohrstellen. Die Bohrstellen in einer Reihe und die Bohrstellen in einer Zeile fluchten jeweils.

Bei dem dargestellten Ausführungsbeispiel sind Durchgangsbohrungen 7 mit rechteckigem Querschnitt herzustellen. Alternativ hierzu sind beliebige andere Querschnittsformen, beispielsweise kreisförmige, ovale, andere vieleckige Formen sowie Formen mit Rundungen und Ecken möglich. Die rechteckige Fläche, über welche sich die herzustellenden Durchgangsbohrungen 7 an der jeweiligen Bohrstelle über die Oberfläche des Bauteils erstrecken sollen, ist in der Figur 3 gut erkennbar, welche eine vergrößerte Darstellung der Fläche einer Durchgangsbohrung 7 zeigt.

Erfindungsgemäß ist die Fläche jeder herzustellenden Durchgangsbohrung 7 in vier Sektoren A - D unterteilt. Die rechteckige Fläche der Durchgangsbohrungen 7 ist hier konkret durch die beiden Diagonalen 8, 9 in vier jeweils dreieckige Sektoren A - D unterteilt, so dass die beiden gegenüberliegenden Sektoren C und D sowie A und B die gleiche Form aufweisen.

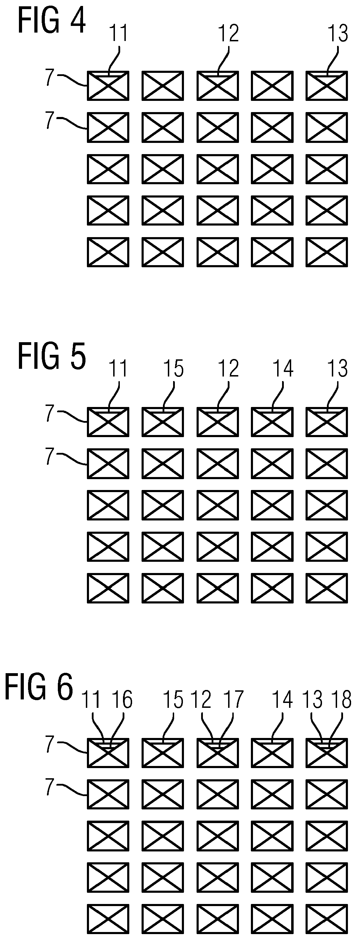

Zur Herstellung der Durchgangsbohrungen 7 unter Durchführung des erfindungsgemäßen Verfahrens wird wie folgt vorgegangen. Es wird zunächst, wie in der Figur 4 erkennbar, in dem Sektor A an der linken Bohrstelle in der ersten Reihe entlang einer geradlinigen Abtragslinie 11, die parallel zu der in Figur 3 erkennbaren oberen Außenkante 10 der Fläche der Durchgangsbohrung 7 verläuft und in unmittelbarer Nähe zu dieser liegt, Material mittels Laserstrahlung entfernt. Hierzu wird der Laserstrahl 6 entlang der Abtragslinie 11 über die Oberfläche der Wandung 3 des Bauteils 1 geführt.

Die Bearbeitung des nächsten Sektors erfolgt in dem korrespondierenden Sektor A der Fläche der Durchgangsbohrung 7 an der übernächsten, also der mittleren Bohrstelle in der obersten Reihe, und zwar, wie in Figur 4 dargestellt, ebenfalls entlang einer geraden Abtragslinie 12. Bei der unmittelbar aufeinanderfolgenden Bearbeitung dieser zwei Sektoren A wird erfindungsgemäß die zweite Bohrstelle von links ausgelassen, die zwischen der ersten Bohrstelle, an der der erste Sektor A bearbeitet wurde und der mittleren Bohrstelle, an der der zweite Sektor A bearbeitet wurde, liegt.

Im nächsten Schritt wird in analoger Weise verfahren. Es wird, ausgehend von der mittleren Bohrstelle, die vierte Bohrstelle von links in der obersten Reihe ausgelassen, also nicht bearbeitet und dann der zu den vorangegangenen Sektoren A korrespondierende Sektor A in der rechten Bohrstelle der obersten Reihe bearbeitet, wobei auch hier Material entlang einer geraden Abtragslinie 13 mittels des Laserstrahls 6 entfernt wird. Die in der Figur 4 erkennbaren drei geraden Abtragslinien 11 bis 13 erstrecken sich dabei alle in Längsausrichtung der Reihen von Bohrstellen. Darüber hinaus fluchten die drei geraden Abtragslinien 11 bis 13, sodass die Laserstrahleinrichtung zur Entfernung des Materials entlang der geraden Abtragslinien 11 bis 13 entlang einer geraden Strecke in Richtung der Reihe verfahren werden kann.

In einem nächsten Schritt wird Material in den korrespondierenden Sektoren A der Durchgangsbohrungen 7 an den zuvor in der obersten Reihe ausgelassenen beiden Bohrstellen, also der zweiten von rechts und der zweiten von links, entfernt. Hierzu wird die Lasereinrichtung ausgehend von der rechten Bohrstelle in der obersten Reihe zurück in Richtung der linken Bohrstelle bewegt, wobei Material entlang der geraden Abtragslinien 14 und 15 in den Sektoren A an den zuvor ausgelassenen beiden Bohrstellen entfernt wird. Der Laserstrahl 6 wird dabei entlang der gleichen geraden Strecke verfahren, entlang derer er auch zur Bearbeitung der ersten drei Sektoren, also der Materialentfernung entlang der Abtragslinien 11, 12 und 13 verfahren wurde, da die Abtragslinien 14 und 15 mit de Abtragslinien 11 bis 13 fluchten.

Anschließend wird, wieder beginnend an der linken Bohrstelle der obersten Reihe, entlang einer weiteren geraden Abtragslinie 16, die sich relativ der ersten geraden Abtragslinie 11 weiter innenliegend innerhalb der herzustellenden Durchgangsbohrung 7 erstreckt und parallel zu der geraden Abtragslinie 11 liegt, Material mittels der Laserstrahleinrichtung entfernt. Hierzu wird die Laserstrahlrichtung entlang einer geraden Strecke bewegt, die in Bezug auf die zuvor abgefahrene Strecke parallel nach innen versetzt ist. Es wird dann analog zu der in Figur 4 dargestellten Vorgehensweise die zweite Bohrstelle von links in der obersten Reihe übersprungen und in dem korrespondierenden Sektor A der mittleren Bohrstelle der obersten Reihe entlang einer weiteren geraden Abtragslinie 17 Material entfernt. Im nächsten Schritt wird die zweite Bohrstelle von rechts übersprungen und in der rechten Bohrstelle wird in gleicher Weise entlang einer geraden Abtragslinie 18 Material entfernt. Während der Entfernung von Material entlang der geraden Abtragslinien 16 - 18 kann die Laserstrahleinrichtung wieder entlang einer geraden Strecke verfahren werden, da die drei Abtragslinien 16 - 18 fluchten.

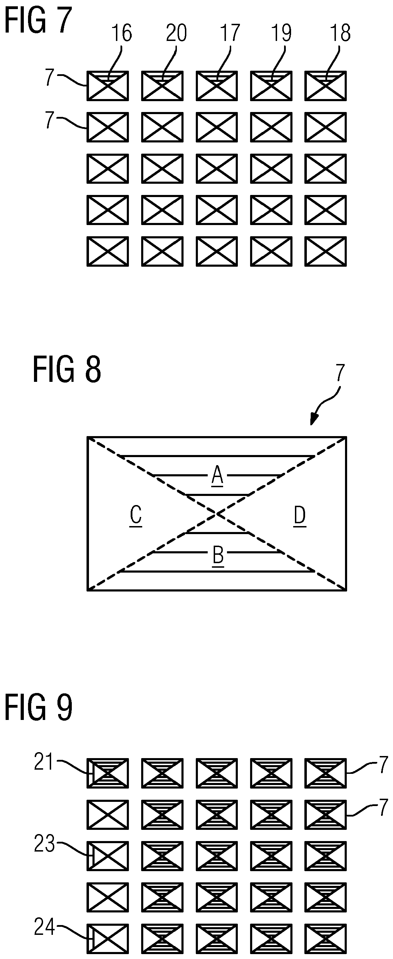

Um die geraden Abtragslinien 19 und 20 an den zuvor ausgelassenen beiden Bohrstellen, konkret an der zweiten Bohrstelle von rechts sowie der zweiten Bohrstelle von links in der obersten Reihe zu bearbeiten, wird, wie in Figur 7 dargestellt, der Laserstrahl 6 entlang der selben geraden Strecke aber nun wieder nach links verfahren.

In der vorgenannten Weise wird in dem Sektor A jeder Bohrstelle der oberen Reihe entlang einer dritten, gegenüber den beiden bereits bearbeiteten Abtragslinien weiter innen liegenden geraden Abtragslinie Material entfernt. Die dritte, am weitesten innen liegende Abtragslinie ist in der Figur 8, die die Fläche der Durchgangsbohrung 7 mit den vier Sektoren A - D zeigt, zu erkennen.

Anschließend werden die dem Sektor A gegenüber liegenden Sektoren B an jeder Bohrstelle der oberen Reihe bearbeitet, wobei auch an diesen entlang drei gerader Abtragslinien Material entfernt wird. Dabei wird wieder mit der weiter außen liegenden Abtragslinie begonnen und dann wird nacheinander Material entlang der beiden weiter innen liegenden Abtragslinien entfernt. In Figur 8 sind die Abtragslinien in den Sektoren B dargestellt.

Nachdem in der oberen Reihe des Bohrstellenmusters in allen Sektoren A und B entlang dreier sich parallel zueinander erstreckender gerader Abtragslinien Material entfernt wurde, wird in die zweite Reihe von oben gesprungen und das komplette Prozedere wiederholt. Weitere Wiederholungen der beschriebenen Verfahrensschritte werden zur Bearbeitung der Sektoren A und B an den Bohrstellen in der dritten, vierten und fünften Reihe von oben absolviert, bis an allen Bohrstellen des Bohrstellenmusters in den Sektoren A und B, wie in Figur 8 beispielhaft dargestellt, Material entlang der geraden Abtragslinien mittels der Laserstrahlung entfernt wurde.

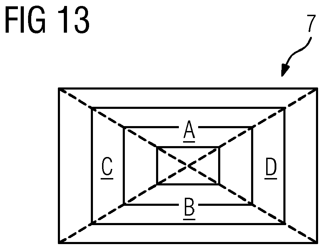

Anschließend werden die verbleibenden Sektoren C und D bearbeitet. In diesen wird, wie in den Figuren 9 - 12 sowie in der Figur 13 erkennbar, Material entlang gerader Abtragslinien entfernt, die sich in Längsrichtung der Zeilen, also quer zu den Reihen erstrecken. Zunächst wird, wie in Figur 9 dargestellt, in der linken Bohrstelle der obersten Reihe in dem Sektor C entlang einer entsprechend orientierten geraden Abtragslinie 21 Material entfernt. Diese ist parallel zu der in Figur 3 erkennbaren linken Außenkante 22 der Durchgangsbohrung 7 orientiert und erstreckt sich in unmittelbarer Nähe zu dieser. Anschließend wird völlig analog zu der Vorgehensweise innerhalb der Reihen die Laserstrahleinrichtung entlang der linken Zeile verfahren, wobei die zweite Bohrstelle von oben in der linken Zeile übersprungen wird und an dem korrespondierenden Sektor C der dritten Bohrstelle von oben Material mittels des Laserstrahls 6 entlang einer entsprechenden, in Richtung der Zeile orientierten, geraden Abtragslinie 23 entfernt wird.

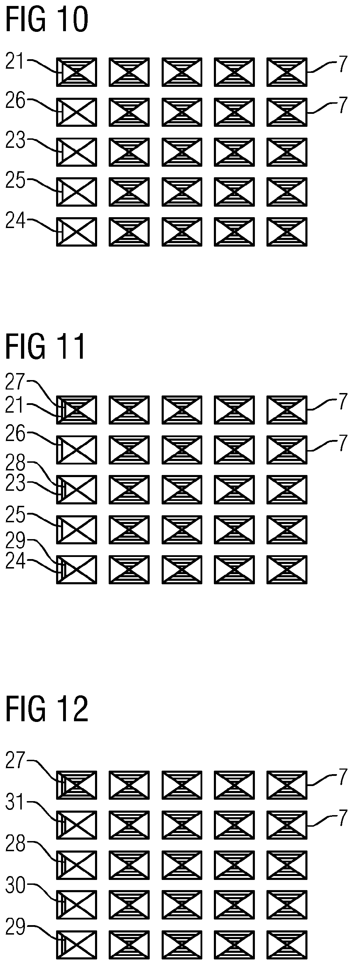

Unter Auslassung der vierten Bohrstelle von oben wird dann in der untersten Bohrstelle der linken Zeile entlang der Abtragslinie 24 Material entfernt. Wie in Figur 10 dargestellt, wird im Anschluss in korrespondierenden Sektoren C der zuvor ausgelassenen zweiten sowie vierten Bohrstelle von oben entlang gerader Abtragslinien 25 bzw. 26 Material gearbeitet, wobei der Laserstrahl 6 nun entlang einer Geraden in Richtung der Zeile von unten nach oben verfahren wird.

Wie in den Figuren 11 und 12 dargestellt, wird im Anschluss in völlig analoger Weise entlang auf der Fläche der Durchgangsbohrung 7 weiter innenliegender gerader Abtragslinien 27 - 29 sowie 30 und 31 Material entfernt. Anschließend wird, wie in Figur 13 erkennbar, entlang einer dritten Abtragslinie, die wiederum weiter innen liegt, Material in den korrespondierenden Sektoren C aller Bohrstellen der linken Zeile entfernt und anschließend werden auf entsprechende Weisedier korrespondierenden Sektoren D aller Bohrstellen dieser Zeile bearbeitet, wobei die Bearbeitung wiederum jeweils außen begonnen und dann immer weiter innen fortgesetzt wird.

Nachdem die linke Zeile auf die vorgenannte Art fertig gestellt wurde, wird die zweite, dritte, vierte und fünfte Zeile von links in gleicher Weise bearbeitet.

Nach der Fertigstellung der letzten Zeile ist an jeder Bohrstelle in jedem Sektor A - D der Flächen der Durchgangsbohrungen 7 Material entlang der Abtragslinien entfernt worden. Im Ergebnis ist über die gesamte rechteckige Fläche jeder Durchgangsbohrung 7 Material entfernt worden.

Die gesamte Prozedur wird anschließend wiederholt, um Material über die gesamte Fläche der Durchgangsbohrungen 7 jedoch in einer darunterliegenden Abtragsebene zu entfernen. Die schichtweise Abtragung unter Anwendung des erfindungsgemäßen Verfahrens wird so oft wiederholt, bis an jeder Bohrstelle das Material über die gesamte rechteckige Fläche und die gesamte Tiefe der oberen Wandung 3 des Bauteils 1 entfernt wurde und somit an den insgesamt 25 Bohrstellen Durchgangsbohrungen in rechteckiger Form hergestellt wurden.

Da erfindungsgemäß nicht die Sektoren A - D einer Durchgangsbohrung nacheinander bearbeitet werden, sondern die unmittelbar aufeinander folgende Bearbeitung zweier Sektoren jeweils in Sektoren der Durchgangsbohrung an unterschiedlichen Bohrstellen erfolgt, wobei konkret jeweils wenigstens eine Bohrstelle übersprungen wird, ist gewährleistet, dass das in dem Bauteil in dem Hohlraum 2 des Bauteils 1 vorgesehene Schutzmittel 3 zu keiner Zeit so stark lokal erwärmt wird, dass es wieder in flüssigen Zustand übergeht. Im Ergebnis ist während des gesamten Bearbeitungsprozesses die den Hohlraum 2 rückseitig begrenzenden Wandung 4 vor Beschädigungen durch die Laserstrahlung geschützt.

Erfindungsgemäß wird die zum Einsatz kommende Laserstrahleinrichtung zur Herstellung der Durchgangsbohrungen 7 jeweils über eine gesamte Reihe bzw. über eine gesamte Zeile entlang einer geraden Strecke bewegt und entlang dieser wird in dem fluchtenden Abtragslinien in den Sektoren Material entfernt. Dies hat den großen Vorteil, dass die Laserstrahleinrichtung bei der Bearbeitung entlang der gesamten Reihe bzw. Zeile immer in eine Richtung verfahren werden kann und weder umgelenkt noch beschleunigt werden muss. Im Ergebnis können eine zügige Bearbeitung sowie optimierte Verfahrwege der Laserstrahlung realisiert und damit eine besonders effiziente und wirtschaftliche Herstellung von Durchgangsbohrungen ermöglicht werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Herstellen von Durchgangsbohrungen (7) mittels Laserstrahlung in einer Wandung (3) eines Bauteils (1), die einen Hohlraum (2), in dem ein unter Erwärmung verflüssigbares Schutzmittel (5) vorgesehen ist, begrenzt, bei dem an einer Mehrzahl von definierten Bohrstellen Durchgangsbohrungen (7) in die Wandung (3) des Bauteils (1) eingebracht werden, indem an den Bohrstellen nacheinander Material mittels Laserstrahlung entfernt wird,
**dadurch gekennzeichnet, dass**
die Fläche jeder Durchgangsbohrung (7) jeweils in zwei oder mehr Sektoren (A - D) unterteilt ist und die Entfernung von Material sektorweise erfolgt, wobei die unmittelbar aufeinanderfolgende Bearbeitung zweier Sektoren (A - D) in der Weise erfolgt, dass nach der Entfernung von Material in einem Sektor (A - D) an einer vorgegeben Bohrstelle Material in einem Sektor (A - D) an einer weiteren Bohrstelle entfernt wird.

2. Verfahren nach Anspruch 1,
**dadurch gekennzeichnet, dass**
die weitere Bohrstelle von der vorgegebenen Bohrstelle weiter entfernt liegt als wenigstens zwei,
insbesondere drei oder mehr zu der vorgegebenen Bohrstelle näher liegende Bohrstellen, die ausgelassen werden.

3. Verfahren nach Anspruch 1 oder 2,
**dadurch gekennzeichnet, dass**
zwischen der vorgegebenen Bohrstelle und der weiteren Bohrstelle wenigstens eine Bohrstelle liegt, die ausgelassen wird,
insbesondere zwischen der vorgegebenen und der weiteren Bohrstelle zwei oder mehr Bohrstellen liegen, die ausgelassen werden.

4. Verfahren nach einem der vorhergehenden Ansprüche,
**dadurch gekennzeichnet, dass**
in den Sektoren (A - D) entlang wenigstens einer Abtragslinie (11 - 20, 21, 23 - 31) insbesondere entlang mehrerer Abtragslinien (11 - 20, 21, 23 - 31) Material entfernt wird.

5. Verfahren nach Anspruch 4,
**dadurch gekennzeichnet, dass**
in den Sektoren (A - D) entlang wenigstens einer geraden Abtragslinie (11 - 20, 21, 23 - 31),
insbesondere entlang mehrerer gerader Abtragslinien (11 - 20, 21, 23 - 31), die sich bevorzugt parallel zueinander erstrecken, Material entfernt wird.

6. Verfahren nach Anspruch 5,
**dadurch gekennzeichnet, dass**
die Mehrzahl von Bohrstellen mehrere Reihen und Zeilen von Bohrstellen umfasst und dass in den Sektoren (A - D) entlang gerader Abtragslinien (11 - 20, 21, 23 - 31) Material entfernt wird, die sich entlang der Längsrichtung der Reihen und/oder der Zeilen erstrecken.

7. Verfahren nach Anspruch 6,
**dadurch gekennzeichnet, dass**
Material ausschließlich entlang gerader Abtragslinien (11 - 20, 21, 23 - 31) entfernt wird, die sich entweder entlang der Längsrichtung der Reihen oder entlang der Längsrichtung der Zeilen erstrecken.

8. Verfahren nach Anspruch 6 oder 7,
**dadurch gekennzeichnet, dass**
in zueinander korrespondierenden Sektoren (A-D) der Flächen der Durchgangsbohrungen (7) in einer Reihe die geraden Abtragslinien (11 - 20, 21, 23 - 31), die sich entlang der Längsrichtung der Reihe erstrecken, fluchten und/oder in zueinander korrespondierenden Sektoren (A - D) der Flächen der Durchgangsbohrungen (7) in einer Zeile die geraden Abtragslinien (11 - 20, 21, 23 - 31), die sich entlang der Längsrichtung der Zeile erstrecken, fluchten, so dass ein Laserstrahl zur Entfernung von Material entlang fluchtender Abtragslinien (11 - 20, 21, 23 - 31) der Sektoren (A - D) in einer Reihe bzw. in einer Zeile entlang einer geraden Strecke entlang der Reihe bzw. Zeile verfahren werden kann.

9. Verfahren nach einem der vorhergehenden Ansprüche,
bei dem die Mehrzahl von definierten Bohrstellen mehrere Reihen und mehrere Zeilen von Bohrstellen umfasst, und bei dem die unmittelbar aufeinanderfolgende Bearbeitung zweier Sektoren (A - D) an Bohrstellen in unterschiedlichen Reihen und/oder unterschiedlichen Zeilen erfolgt.

10. Verfahren nach Anspruch 9,
bei dem zwischen zwei unmittelbar aufeinanderfolgend bearbeiteten Sektoren (A - D) jeweils mehrere Reihen und/oder Zeilen von Bohrstellen ausgelassen werden.

11. Verfahren nach einem der Ansprüche 2 bis 10,
bei dem bei der Bearbeitung der Sektoren (A - D) in einem vorgegebenen Muster jeweils eine oder mehrere nächstliegende Bohrstellen und/oder eine oder mehrere nächstliegende Reihen von Bohrstellen und/oder eine oder mehrere nächstliegende Zeilen von Bohrstellen ausgelassen werden.

12. Verfahren nach einem der Ansprüche 2 bis 11,
bei dem die weitere Bohrstelle mindestens 1,5 mal, insbesondere mindestens zwei Mal und vorzugsweise mindestens drei Mal oder mindestens fünf Mal weiter von der vorgegebenen Bohrstelle entfernt liegt als diejenige ausgelassene Bohrstelle, die der vorgegebenen Bohrstelle am nächsten liegt.

13. Verfahren nach einem der vorhergehenden Ansprüche,
**dadurch gekennzeichnet, dass**
als Schutzmittel (5) ein Polymer in flüssigem Zustand in den Hohlraum (2) eingebracht, insbesondere eingegossen oder eingesprüht oder eingespritzt wird, bevor die Mehrzahl von Durchgangsbohrungen (7) in die Wandung (3) des Bauteils (1) eingebracht werden.

14. Verfahren nach einem der vorhergehenden Ansprüche,
**dadurch gekennzeichnet, dass**
die Fläche der Durchgangsbohrungen (7) einen runden Querschnitt oder einen vieleckigen, insbesondere viereckigen, bevorzugt trapezförmigen Querschnitt oder einen ovalen Querschnitt oder einen Querschnitt mit Ecken und Rundungen aufweisen.

15. Verfahren nach einem der vorhergehenden Ansprüche,
**dadurch gekennzeichnet, dass**
die Fläche der Durchgangsbohrungen (7) jeweils in drei oder vier oder fünf Sektoren (A - D) unterteilt ist, die insbesondere gleichgroß, bevorzugt kongruent sind.

16. Verfahren nach einem der vorhergehenden Ansprüche,
**dadurch gekennzeichnet, dass**
die Materialentfernung in den Sektoren (A - D) in Bezug auf die Flächen der Durchgangsbohrungen (7) weiter außen liegend beginnt und dann jeweils weiter innen liegend fortgeführt wird.

17. Verfahren nach einem der vorhergehenden Ansprüche,
**dadurch gekennzeichnet, dass**
die Entfernung von Material mittels Laserstrahlung schichtweise erfolgt.

## Claims

1. Method for producing through bores (7) by means of laser radiation in a wall (3) of a component (1), said wall (3) delimiting a cavity (2) in which a protective agent (5) that is capable of being liquefied when heated is provided, in which method through bores (7) are incorporated in the wall (3) of the component (1) at a plurality of defined bore locations in that material is sequentially removed by means of laser radiation at the bore locations,
**characterized in that**
the area of each through bore (7) is in each case subdivided into two or more sectors (A - D), and the removal of material being performed sector-by-sector, wherein the directly successive machining of two sectors (A - D) is performed in such a manner that after the removal of material in one sector (A - D) at a predefined bore location, material is removed in a sector (A - D) at a further bore location.

2. Method according to Claim 1,
**characterized in that**
the further bore location is more remote from the predefined bore location than at least two, in particular three or more, bore locations which are nearer to the predefined bore location and ignored.

3. Method according to Claim 1 or 2,
**characterized in that**
at least one bore location which is ignored lies between the predefined bore location and the further bore location, in particular that two or more bore locations which are ignored lie between the predefined and the further bore location.

4. Method according to one of the preceding claims,
**characterized in that**
in the sectors (A - D) material is removed along at least one subtraction route (11 - 20, 21, 23 - 31), in particular along a plurality of subtraction routes (11 - 20, 21, 23 - 31) .

5. Method according to Claim 4,
**characterized in that**
in the sectors (A - D) material is removed along at least one straight subtraction route (11 - 20, 21, 23 - 31), in particular along a plurality of straight subtraction routes (11 - 20, 21, 23 - 31) which preferably extend in a mutually parallel manner.

6. Method according to Claim 5,
**characterized in that**
the plurality of bore locations comprises a plurality of rows and lines of bore locations, and **in that** in the sectors (A - D) material is removed along straight subtraction routes (11 - 20, 21, 23 - 31) which extends along the longitudinal direction of the rows and/or of the lines.

7. Method according to Claim 6,
**characterized in that**
material is removed exclusively along straight subtraction routes (11 - 20, 21, 23 - 31) which either extend along the longitudinal direction of the rows, or along the longitudinal direction of the lines.

8. Method according to Claim 6 or 7,
**characterized in that**
in mutually corresponding sectors (A - D) of the areas of the through bores (7) in one row the straight subtraction routes (11 - 20, 21, 23 - 31) which extend along the longitudinal direction of the row are in mutual alignment, and/or in mutually corresponding sectors (A - D) of the areas of the through bores (7) in one line the straight subtraction routes (11 - 20, 21, 23 - 31) which extend along the longitudinal direction of the line are in mutual alignment, such that a laser beam for removing material can be displaced along mutually aligned subtraction routes (11 - 20, 21, 23 - 31) of the sectors (A - D) in one row, or in one line, respectively, along a straight distance along the row or line, respectively.

9. Method according to one of the preceding claims,
in which the plurality of defined bore locations comprises a plurality of rows and a plurality of lines of bore locations, and in which the directly successive machining of two sectors (A - D) is performed on bore locations in different rows and/or different lines.

10. Method according to Claim 9,
in which in each case a plurality of rows and/or lines of bore locations are ignored between two directly successively machine sectors (A - D).

11. Method according to one of Claims 2 to 10,
in which in the machining of the sectors (A - D) in a predefined pattern, in each case one or a plurality of nearest bore locations, and/or one or a plurality of nearest rows of bore locations, and/or one or a plurality of nearest lines of bore locations are ignored.

12. Method according to one of Claims 2 to 11,
in which the further bore location is at least 1.5 times, in particular at least two times, and preferably at least three times, or at least five times, more remote from the predefined bore location than that ignored bore location that is nearest to the predefined bore location.

13. Method according to one of the preceding claims,
**characterized in that**
as a protective agent (5) a polymer in the liquid state is incorporated, in particular cast or sprayed or injected, into the cavity (2) prior to the plurality of through bores (7) being incorporated in the wall (3) of the component (1).

14. Method according to one of the preceding claims,
**characterized in that**
the area of the through bores (7) have a round cross section or a polygonal, in particular quadrangular, preferably trapezoidal cross-section, or an oval cross section, or a cross section having corners and radii.

15. Method according to one of the preceding claims,
**characterized in that**
the area of the through bores (7) is in each case subdivided into three or four or five sectors (A - D) which in particular are of identical size, preferably congruent.

16. Method according to one of the preceding claims,
**characterized in that**
the removal of material in the sectors (A - D) in relation to the areas of the through bores (7) begins so as to be further outward and is then continued in each case so as to be further inward.

17. Method according to one of the preceding claims,
**characterized in that**
the removal of material by means of laser radiation is performed layer-by layer.

## Revendications

1. Procédé de production de trous (7) traversants, au moyen d'un rayonnement laser dans une paroi (3) d'une pièce (1), qui délimite une cavité (2), dans laquelle est prévue un agent (5) de protection liquéfiable par échauffement, dans lequel en une pluralité de points de perçage définis, on ménage des trous (7) traversants dans la paroi (3) de la pièce (1), en éliminant, aux points de perçage successivement, de la matière, au moyen d'un rayonnement laser,
**caractérisé en ce que**
la surface de chaque trou (7) traversant est subdivisée en deux ou plusieurs secteurs (A à D) et l'élimination de matière s'effectue secteur par secteur, l'usinage, se succédant directement, de deux secteurs (A à D) s'effectuant, de manière à ce qu'après l'élimination de matière dans un secteur (A à D), on élimine, en un point de perçage donné à l'avance, de la matière dans un secteur (A à D), en un autre point de perçage.

2. Procédé suivant la revendication 1,
**caractérisé en ce que**
l'autre point de perçage est plus éloigné du point de perçage donné à l'avance, qu'au moins deux,
notamment trois ou plus, points de perçage, qui sont plus près du point de perçage donné à l'avance et qui ont été laissés.

3. Procédé suivant la revendication 1 ou 2,
**caractérisé en ce que**
au moins un point de perçage, qui a été laissé, se trouve entre le point de perçage donné à l'avance et l'autre point de perçage,
notamment deux ou plusieurs points de perçage, qui ont été laissés, se trouvent entre le point de perçage donné à l'avance et l'autre point de perçage.

4. Procédé suivant l'une des revendications précédentes,
**caractérisé en ce que**
l'on élimine de la matière dans les secteurs (A à D) suivant au moins une ligne (11 à 20, 21, 23 à 31) d'enlèvement, notamment suivant plusieurs lignes (11 à 20, 21, 23 à 31) d'enlèvement.

5. Procédé suivant la revendication 4,
**caractérisé en ce que**
l'on élimine de la matière dans les secteurs (A à D) suivant au moins une ligne (11 à 20, 21, 23 à 31) d'enlèvement droite,
notamment suivant plusieurs lignes (11 à 20, 21, 23 à 31) d'enlèvement droites, qui s'étendent de préférence parallèlement entre elles.

6. Procédé suivant la revendication 5,
**caractérisé en ce que**
la pluralité de points de perçage comprend plusieurs rangées et colonnes de points de perçage et **en ce que** dans les secteurs (A à D), on élimine de la matière suivant des lignes (11 à 20, 21, 23 à 31) d'enlèvement droites, qui s'étendent suivant la direction longitudinale des rangées et/ou des colonnes.

7. Procédé suivant la revendication 6,
**caractérisé en ce que**
l'on élimine de la matière, exclusivement, suivant des lignes (11 à 20, 21, 23 à 31) d'enlèvement droites, qui s'étendent dans la direction longitudinale des rangées ou suivant la direction longitudinale des colonnes.

8. Procédé suivant la revendication 6 ou 7,
**caractérisé en ce que**
dans des secteurs (A à D), qui se correspondent, des surfaces des trous (7) traversants dans une rangée, les lignes (11 à 20, 21, 23 à 31) d'enlèvement droites, qui s'étendent suivant la direction longitudinale de la rangée, sont alignées et/ou dans des secteurs (A à D), qui se correspondent, des surfaces des trous (7) traversants dans une colonne, les lignes (11 à 20, 21, 23 à 31) d'enlèvement droites, qui s'étendent suivant la direction longitudinale de la colonne, sont alignées de manière à pouvoir déplacer un faisceau laser d'élimination de matière suivant des lignes (11 à 20, 21, 23 à 31) d'enlèvement alignées des secteurs (A à D) dans une rangée ou dans une colonne, en droite ligne suivant la rangée ou la colonne.

9. Procédé suivant l'une des revendications précédentes,
dans lequel la pluralité de points de perçage définis comprend plusieurs rangées et plusieurs colonnes de points de perçage, et dans lequel l'usinage se succédant directement, de deux secteurs (A à D) s'effectue en des points de perçage dans des rangées différentes et/ou dans des colonnes différentes.

10. Procédé suivant la revendication 9,
dans lequel on laisse plusieurs rangées et/ou plusieurs colonnes de points de perçage entre deux secteurs (A à D) usinés en se succédant directement.

11. Procédé suivant l'une des revendications 2 à 10,
dans lequel, lors de l'usinage des secteurs (A à D), suivant un motif donné à l'avance, on laisse respectivement un ou plusieurs points de perçage les plus proches et/ou une ou plusieurs rangées les plus proches de points de perçage et/ou une ou plusieurs colonnes les plus proches de points de perçage.

12. Procédé suivant l'une des revendications 2 à 11,
dans lequel les autres points de perçage sont au moins deux fois et, de préférence, au moins trois fois ou au moins cinq fois plus éloignés du point de perçage donné à l'avance, que le point de perçage qui a été laissé et qui est le plus proche du point de perçage donné à l'avance.

13. Procédé suivant l'une des revendications précédentes,
**caractérisé en ce que**
l'on injecte dans la cavité (2), comme agent (5) de protection, un polymère à l'état liquide, notamment en l'y coulant ou en l'y pulvérisant ou en l'y projetant, avant de ménager la pluralité de trous (7) traversants dans la paroi (3) de la pièce (1).

14. Procédé suivant l'une des revendications précédentes,
**caractérisé en ce que**
les surfaces des trous (7) traversants ont une section transversale circulaire ou polygonale, notamment quadrangulaire, en ayant de préférence une section transversale trapézoïdale ou une section transversale ovale ou une section transversale ayant des sommets et des arrondis.

15. Procédé suivant l'une des revendications précédentes,
**caractérisé en ce que**
la surface des trous (7) traversants est subdivisée en trois ou quatre ou cinq secteurs (A à D), qui sont, notamment de même dimension, en étant de préférence congruente.

16. Procédé suivant l'une des revendications précédentes,
**caractérisé en ce que**
l'on commence à éliminer de la matière dans les secteurs (A à D) se trouvant plus à l'extérieur par rapport aux surfaces des trous (7) traversants et ensuite on continue avec ceux se trouvant plus à l'intérieur.

17. Procédé suivant l'une des revendications précédentes,
**caractérisé en ce que**
l'élimination de matière, au moyen d'un rayonnement laser, s'effectue couche par couche.
